# EUROPÄISCHE PATENTSCHRIFT

(11) **EP 3 729 476 B1**
(45) Veröffentlichungstag und Bekanntmachung des Hinweises auf die Patenterteilung: **12.06.2024**
(21) Anmeldenummer: 18826705.8
(22) Anmeldetag: 21.12.2018
(51) Int. Cl.: H01F 1/22, H01F 41/16, H01F 41/02, H01F 3/08, B22F 3/105, B22F 3/087, B33Y 80/00, B33Y 10/00, B22F 10/20, C22C 22/00, B33Y 70/00

(54) **VERFAHREN ZUR HERSTELLUNG EINES WEICHMAGNETISCHEN FORMTEILS UND WEICHMAGNETISCHES FORMTEIL**
METHOD FOR THE PRODUCTION OF A SOFT MAGNETIC FORMED PART AND SOFT MAGNETIC FORMED PART
PROCÉDÉ DE FABRICATION D'UNE PIÈCE FORMÉE MAGNÉTIQUE DOUCE ET PIÈCE FORMÉE MAGNÉTIQUE DOUCE

(30) Priorität: 22.12.2017 EP 17209979
(43) Veröffentlichungstag der Anmeldung: 28.10.2020
(73) Patentinhaber: QDF AG, 3647 Reutigen (CH)
(72) Erfinder: BÜTSCHI, Thomas, 3647 Reutigen (CH)
(74) Vertreter: AMMANN PATENTANWÄLTE AG
(86) Internationale Anmeldenummer: PCT/EP2018/086520
(87) Internationale Veröffentlichungsnummer: WO 2019/122307

(56) Entgegenhaltungen:
- WO-A1-2013/185967
- JP-A- 2015 133 416
- US-A1- 2002 192 104
- US-A1- 2017 154 713
- US-B1- 6 202 757

## Beschreibung

Die Erfindung betrifft ein Verfahren zur Herstellung eines weichmagnetischen Formteils sowie ein weichmagnetisches Formteil.

Weichmagnetische Werkstoffe sind ferromagnetische Materialien, die sich in einem Magnetfeld leicht magnetisieren lassen. Werden Formteile aus einem derartigen Werkstoff z.B. in Form von Statorteilen einem äusseren magnetischen Wechselfeld ausgesetzt, kommt es zu einer wiederkehrenden Ummagnetisierung. Es entstehen dabei Ummagnetisierungsverluste. Bei elektrisch leitenden Formteilen rühren ein Teil dieser Verluste von den induzierten Wirbelströmen her. Um die Ummagnetisierungsverluste zu reduzieren, ist es bekannt die Formteile aus Eisenpartikeln herzustellen, die vollständig von einer elektrischen Isolierschicht umgeben sind, um so einen Stromfluss zu verhindern. Zur Fertigung des Formteils werden die isolierten Eisenpartikel durch Pressen und Sintern im Ofen in die gewünschte Form gebracht. Dieses Herstellungsverfahren hat verschiedene Nachteile:
- Es kommt zu einem Schwund, der im Bereich von 15 - 20 % liegen kann. Der Schwund ist schwierig zu berücksichtigen, da er in der Regel ein nicht-lineares Verhalten aufweist.
- Sollen grosse Stückzahlen mit der gewünschten Qualität gefertigt werden, so sind aufwändige Massnahmen vorzusehen, um einen stabilen und formgenauen Prozess zu garantieren, beispielsweise ein Kalibrieren nach dem Sintern.
- Die ganzflächig isolierten Partikel sind nur an der Aussenfläche eines Formteils miteinander verschmolzen, in seinem Innern jedoch bilden sie einen relativ losen Verbund, so dass das Formteil relativ spröde ist und eine mechanische Nachbearbeitung mittels eines Werkzeugs erschwert oder gar verunmöglicht ist.
- Die maximal erzielbare Dichte, welche die aus den vollständig isolierten Eisenpartikeln gefertigten Formteile aufweist, ist limitiert.
- Die Herstellungskosten sind hoch u.a. aufgrund der langen Durchlaufzeit und des hohen Energieverbrauches.

In der DE 10 2014 006 519 A1 ist ein Verfahren zur Herstellung komplexer, magnetischer und/oder magnetisierbarer Formteile mithilfe additiver Fabrikatoren beschrieben. Es sind keine Massnahmen vorgesehen, um den elektrischen spezifischen Widerstand der Formteile tief zu halten.

US 2017/154713 A1 beschreibt ein additives Verfahren, bei dem isolierende Schichten zwischen weichmagnetischen Schichten eingebettet sind.

Eine Aufgabe der vorliegenden Erfindung ist es, ein Verfahren von weichmagnetischen Formteilen mit verbesserten Eigenschaften anzugeben.

Ein Verfahren, das diese Aufgabe löst, ist im Patentanspruch 1 angegeben. Die weiteren Patentansprüche geben bevorzugte Ausführungen an sowie in Anspruch 14 ein Formteil, welches durch das erfindungsgemässe Verfahren herstgestellt ist.

Gemäss einem ersten Aspekt werden magnetisch leitende Partikel, die frei von einer Ummantelung einer elektrischen Isolierschicht sind, miteinander so verschmolzen, dass lokal in den Zwischenräumen elektrische Isolierstellen angeordnet sind. Erfindungsgemäss erfolgt das Verschmelzen in Schichten.

Gemäss einem zweiten Aspekt werden durch eine Energiezufuhr magnetisch leitende Partikel zumindest angeschmolzen. Die Energiezufuhr ist zeitlich konzentriert und erfolgt typischerweise in weniger als 1 Sekunde. Es bildet sich in den Zwischenräumen aufgrund eines Zusatzstoffes elektrische Isolierstellen. Diese reduzieren insbesondere die Wirbelströme bei der Ummagnetisierung. Die magnetisch leitenden Partikel brauchen nicht zwingendermassen mit einer vollständigen Umhüllung einer Isolierschicht versehen sein. Es ist dadurch eine hohe Dichte erzielbar.

Die elektrischen Isolierstellen, die beim Verfahren gemäss dem ersten bzw. zweiten Aspekt entstehen, sind inselartig im Innern des magnetflussleitenden Formteils ausgebildet. Die jeweilige Isolierstelle des Formteils wirkt stromunterbrechend. Wird das Formteil einem sich zeitlich veränderlichen magnetischen Feld ausgesetzt, werden Wirbelströme vermieden oder zumindest reduziert, da ein Stromfluss durch die Isolierstellen unterbrochen wird. Eisenverluste können dadurch vermindert werden.

In einer ersten Ausführungsform wird das Formteil schichtweise hergestellt. Vorzugsweise ist eine Auftragungseinrichtung vorgesehen, um gezielt zusätzlichen Zusatzstoff auf eine Schicht aufzutragen. Dadurch ist ein Formteil herstellbar, welches eine gezielt inhomogene Verteilung an elektrischen Isolierstellen aufweist, um so bei Verwendung als Statorteil den magnetischen Fluss B in eine gewünschte Richtung leiten zu können.

Die Erfindung wird im Folgenden anhand von Ausführungsbeispielen unter Bezugnahme auf Figuren erläutert. Es zeigen
Fig. 1 schematisch ein Beispiel einer Anlage zur Herstellung eines weichmagnetischen Formteils,
Fig. 2 eine Detailansicht eines Gemisches, welches zur Herstellung eines weichmagnetischen Formteils verwendbar ist vor dem Erhitzen,
Fig. 3 das Gemisch gemäss Fig. 2 nach dem Erhitzen,
Fig. 4 eine Detailansicht eines anderen Gemisches, welches zur Herstellung eines weichmagnetischen Formteils verwendbar ist vor dem Erhitzen,
Fig. 5 das Gemisch gemäss Fig. 4 nach dem Erhitzen,
Fig. 6 ein einzelnes Eisenpartikel, welches vollständig mit einer elektrischen Isolierschicht umhüllt ist,
Fig. 7 ein einem Magnetfeld ausgesetztes Formteil aus magnetisch leitenden Partikeln, welches nur partiell mit elektrischen Isolierstellen versehen ist,
Fig. 8 eine typische Hysteresekurve eines Formteils, welche seine magnetische Flussdichte B in Abhängigkeit des umgebenden Magnetfeldes H zeigt,
Fig. 9 ein Beispiel eines Statorteils in einem Längsschnitt,
Fig. 10 ein gemäss dem Stand der Technik gefertigtes Statorteil in einem Längsschnitt,
Fig. 11 eine perspektivische Explosionsansicht einer Ausführungsart eines Stators,
Fig. 12 einen Querschnitt einer anderen Ausführungsart eines Stators,
Fig. 13 einen Querschnitt einer Variante des Stators mit Innenkanälen und Kühlrippen,
Fig. 14 eine 3D-Blechstruktur im Querschnitt,
Fig. 15 einen Querschnitt einer weiteren Ausführungsart eines Rotors und eines Stators mit gezielter Flussumlenkung, und
Fig. 16 einen Querschnitt einer Ausführungsart eines Rotors und eines Stators ohne gezielter Flussumlenkung.

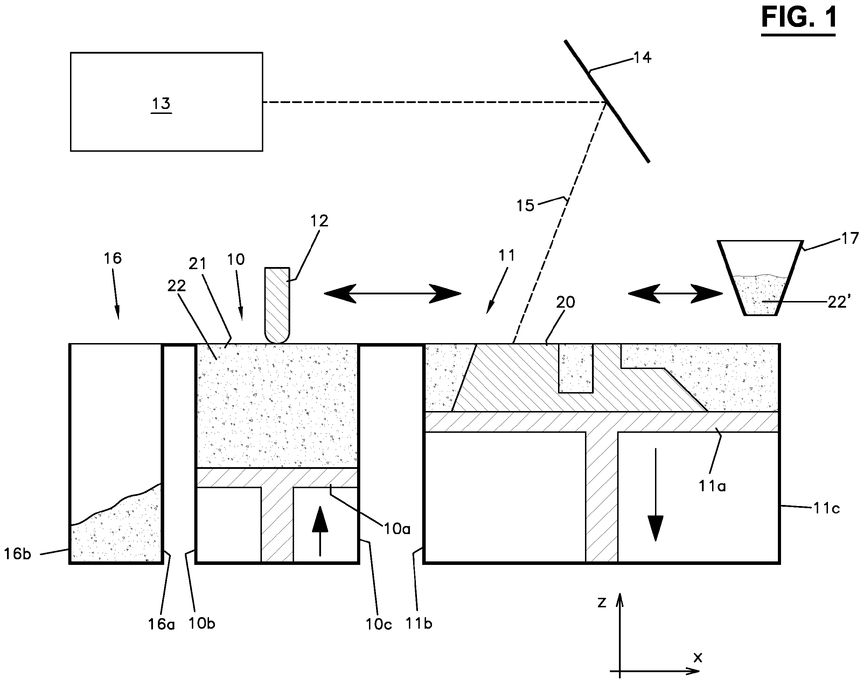

Fig. 1 zeigt schematisch eine Anlage, welche zur Herstellung von weichmagnetischen Formteilen ausgelegt ist und welche ähnlich einer Anlage zum selektiven Lasersintern aufgebaut ist. In der Fig. 1 sind die X- und Z-Achse eingezeichnet, welche die Schnittebene definieren, in welcher die Anlage dargestellt ist. Die Y-Achse erstreckt sich quer zu diesen beiden Achsen X und Z.

Die Anlage umfasst ein Reservoir 10 zur Aufnahme und Zufuhr des Ausgangsmaterials 21, 22, ein Fertigungsbett 11, in welchem das Formteil 20 gefertigt wird, einen Beschichter 12 zur Bildung einer Schicht des Ausgangsmaterials 21, 22 im Fertigungsbett 11, einen Laser 13 sowie eine Scaneinrichtung 14.

Das Reservoir 10 weist einen in Z-Richtung hebbaren Boden 10a auf, welcher beispielsweise Teil eines verschiebbaren Kolbens ist.

Das Fertigungsbett 11 weist eine in Z-Richtung absenkbare Arbeitsplattform 11a auf, die z.B. Teil eines verschiebbaren Kolbens ist.

Der Beschichter 12 ist entlang des Fertigungsbetts 11, d.h. in X-Richtung verfahrbar und z.B. als drehbare Rolle oder Rakel ausgebildet.

Der Laser 13 und die Scaneinrichtung 14 sind zum Erzeugen eines Laserstrahls 15 ausgelegt, der zum lokalen und zeitlich konzentrierten Erhitzen einer Schicht des Ausgangsmaterials im Fertigungsbett 11 dient. Der Laser 13 erzeugt einen Strahl, der typischerweise im Infrarotbereich liegt. Als Laser sind z.B. ein CO₂-Laser oder ein Nd:YAG-Laser geeignet.

Die Scaneinrichtung 14 umfasst optische Elemente, beispielsweise eine oder mehrere Linsen und einen oder mehrere Spiegel, und dient dazu, den vom Laser 13 erzeugten Strahl gegebenenfalls zu fokussieren oder aufzuweiten und entlang einer vorbestimmten Bahn im Fertigungsbett 11 zu führen, die die Form des Formteils 20 auf dem Niveau definiert, in welcher die Schicht erhitzt wird.

Ein weiteres Reservoir 16 dient als Silo, aus welchem Ausgangsmaterial 21, 22 in das Reservoir 10 überführbar und/oder ungenutztes Ausgangsmaterial 21, 22 aus dem Fertigungsbett 11 aufnehmbar ist

Das Reservoir 10, das Fertigungsbett 11 und das Reservoir 16 sind durch Wandungen 10b, 10c, 11b, 11c, 16a, 16b begrenzt. Diese sind vorne und hinten, d.h. in der Y-Richtung gesehen durch weitere (in der Fig. 1 nicht zu sehende) Wandungen verbunden und/oder sind rund ausgebildet, so dass sich jeweils eine seitlich geschlossene Kammer ergibt.

Ein mögliches Verfahren zur Herstellung eines weichmagnetischen Formteils 20 ist wie folgt:
Es werden Geometriedaten bereitgestellt, welche die gewünschte Geometrie des zu fertigenden Formteils definieren. Diese Geometriedaten liegen z.B. als CAD-Daten vor und definieren die Bahn, entlang welcher der Laserstrahl 15 in einer jeweiligen Schicht zu führen ist.

Das Ausgangsmaterial 21, 22 wird im Reservoir 10 bereitgestellt. Als Ausgangsmaterial wird beispielsweise ein Gemisch aus magnetisch leitenden Partikeln 21 und einem Zusatzstoff 22 zur Bildung von elektrischen Isolierstellen 22 verwendet. Diese dienen beim fertigen Formteil 20 dazu, Wirbelströme, die beim Ummagnetisieren entstehen, zu unterbrechen oder zumindest zu reduzieren. Das Gemisch liegt z.B. in einer schüttfähigen Form vor, wobei vorzugweise der Zusatzstoff 22 als Partikel vorliegt. Es ist auch denkbar, den Zusatzstoff 22 in pastöser, flüssiger oder gasförmiger Form so bereitzustellen, dass er mindestens mit der Schicht in Kontakt steht, welche aus den magnetisch leitenden Partikeln 21 im Fertigungsbett 11 gebildet worden ist und welche mit dem Laserstrahl 15 erhitzt wird.

Die magnetisch leitenden Partikel 21 liegen als Pulver und/oder Granulat vor. Das jeweilige Partikel 21 liegt vorzugsweise in reiner Form vor, wobei die Partikel 21 aus unterschiedlichen Materialien bestehen können und somit ein Gemisch bilden.

Als Material für die magnetisch leitenden Partikel 21 ist z.B. geeignet (Gehaltsangaben nachfolgend in Gewichtsprozent):
- Eisen (Fe)
- Nickel (Ni)
- Cobalt (Co)
- Silizium-Eisen-Gemisch. Der Gehalt an Silizium ist z. B. im Bereich von 2.5 bis 4 %, beispielsweise bei 3 %.
- Nickel-Eisen-Gemisch. Der Gehalt an Nickel ist z.B. im Bereich von 8 bis 30 %.
- Cobalt-Eisen-Gemisch. Der Gehalt an Cobalt ist z.B. im Bereich von 10 bis 50 %.

Es können auch andere Gemische vorgesehen sein, die mindestens zwei der folgenden Stoffe umfassen:
- Eisen
- Silizium
- Cobalt
- Nickel
- Aluminium
- Kupfer
- Zinn
- Antimon
- Bor
- Arsen
- Wismut
- Chromoxid
- Ferrite

Vorzugsweise sind die magnetisch leitenden Partikel 21 frei von einer vollständigen Umhüllung durch eine elektrische Isolierschicht.

Als Zusatzstoff 22 sind z.B. folgende Stoffe geeignet:
- Silikon
- Germanium
- Wachs, insbesondere N,N'- Ethylenbisstearamid (Amidwachs, welches z.B. unter der Bezeichnung Acrawax C, Lonza AG, Basel, Schweiz, erhältlich ist). Der Schmelzpunkt liegt unter 200 Grad Celsius und/oder 150 Grad Celsius.
- Aluminiumoxid
- Kohlenstoff
- Keramik
- Glas
- Gas, welches bei der Erhitzung durch den Laserstrahl 15 zu einer Oxidschicht zwischen den Partikeln 21 führt. Als derartige Gase sind z.B. geeignet: Schwefelhexafluorid (SF₆), Gemisch aus Stickstoff (N₂) und Schwefelhexafluorid (z.B. 80 % Stickstoff und 20 % Schwefelhexafluorid).
- Thermoplast, beispielsweise Polyvinylchlorid (PVC), Polyethersulfon (PES), Polycarbonat (PC).

Der Zusatzstoff 22 kann als Partikel vorliegen, deren Korngrösse kleiner ist als jene der magnetisch leitenden Partikel 21. Der Medianwert (d₅₀) der Korngrössenverteilung des Zusatzstoffs 22 ist dann kleiner als der Medianwert (d₅₀) der Korngrössenverteilung der magnetisch leitenden Partikel 21. Es ist auch denkbar, dass der Zusatzstoff 22 als Partikel mit einer Korngrösse vorliegt, die mindestens so gross wie jene der magnetisch leitenden Partikeln 21 ist.

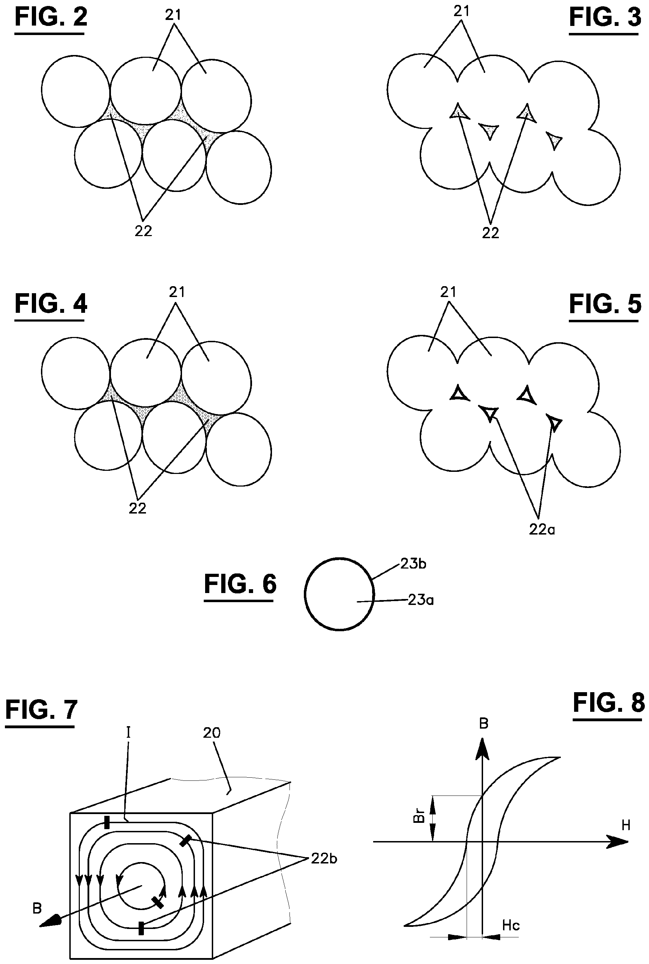

Der Boden 10a wird gehoben und mittels des Beschichters 12 eine Schicht auf der Arbeitsplattform11a gebildet. Die Schicht ist vollflächig und erstreckt sich gemäss Fig. 1 in der XY-Ebene. Sie hat typischerweise eine Dicke im Bereich von 1 bis 200 Mikrometer. Anhand der Geometriedaten wird der Laserstrahl 15 entlang der gewünschten Bahn geführt. Dabei wird das Ausgangsmaterial 21, 22 an den entsprechenden Stellen erhitzt, so dass sich die magnetisch leitenden Partikel 21 miteinander verbinden. Durch geeignete Einstellung des Energieeintrages durch den Laserstrahl 15 werden die magnetisch leitenden Partikel 21 angeschmolzen und der Zusatzstoff 22 bildet in den Zwischenräumen zwischen den magnetisch leitenden Partikeln 21 elektrische Isolierstellen. Dies ist schematisch in den Fig. 2 und 3 sowie 4 und 5 dargestellt, welche eine Schicht mit magnetisch leitenden Partikeln 21 und Zusatzstoff 22 vor bzw. nach dem Erhitzen zeigen. Wie aus Fig. 3 bzw. 5 ersichtlich, haben sich die magnetisch leitenden Partikel 21 im Kontaktbereich verbunden; deren Struktur bleibt jedoch im Wesentlichen erhalten.

Die Energie des Lasers 13 ist sehr schnell einbringbar, so dass ein Einschluss des Zusatzstoffs 22 in den Zwischenräumen erfolgt. In Fig. 3 ist die Situation gezeigt, bei welcher der Zusatzstoff 22 eine höhere Schmelztemperatur als die magnetisch leitenden Partikel 21 aufweist, so dass er durch den Laserstrahl 22 nicht geschmolzen wird. In der Fig. 5 ist die Situation gezeigt, bei welcher der Zusatzstoff 22 die gleiche oder eine tiefere Schmelztemperatur als die magnetisch leitenden Partikel 21 aufweist, so dass er durch den Laserstrahl 22 geschmolzen wird und eine isolierende Schicht 22a in dem jeweiligen Zwischenraum der magnetisch leitenden Partikel 21 bildet.

Je nach Auswahl des Zusatzstoffes 22, beispielsweise als Gas, kann dieser bei der Erhitzung zu einer Oberflächenänderung der magnetisch leitenden Partikel 21 führen, so dass in den Zwischenräumen eine Oxidschicht gebildet wird, die als elektrische Isolierstellen wirken. Gegebenenfalls befindet sich das Fertigungsbett 11 in einer geschlossen Kammer, welchem der Zusatzstoff 22 als Gas zugeführt wird. Es ist auch denkbar, dass der Zusatzstoff 22 zuerst in fester Form vorliegt (z.B. als Acrawax) und bei der Erhitzung schmilzt, so dass dabei ein Gas entsteht, das die Bildung einer Oxidschicht im jeweiligen Zwischenraum bewirkt.

Die Arbeitsplattform 11a wird nach dem Erhitzen um eine Schichtdicke gesenkt. Der Boden 10a wird angehoben und mittels des Beschichters 12 eine nächste Schicht an Ausgangsmaterial 21, 22 im Fertigungsbett 11 aufgetragen. Anschliessend erfolgt wieder die Erhitzung mittels des Laserstrahls 15 an den vorgegebenen Stellen.

Durch sukzessives Auftragen einer Schicht und Erhitzen entsteht das fertige Formteil 20.

Während der Fertigung ist das Formteil 20 im Fertigungsbett 11 im Rest des Ausgangsmaterials 21, 22 eingebettet, welches nicht mittels des Laserstrahls 15 erhitzt worden ist. Am Ende der Fertigung wird das Formteil 20 aus dem Fertigungsbett 11 entnommen und allenfalls noch anhaftendes Ausgangsmaterial 21, 22 abgeklopft, abgebürstet und/oder auf andere Weise entfernt.

Bei dem soweit beschriebenen Verfahren weist jede Schicht eine im Wesentlichen homogene Konzentration an Ausgangsmaterial 21, 22 auf. Das Formteil 20 weist demnach eine im Wesentlichen homogene Verteilung der elektrischen Isolierstellen auf. In einer Ausführungsform des Herstellungsverfahrens ist ein Formteil 20 fertigbar, welches eine lokal unterschiedliche Verteilung an Isolierstellen aufweist. Zu diesem Zweck ist bei der Anlage gemäss Fig. 1 eine Auftragungseinrichtung in Form eines verfahrbaren Arbeitskopfes 17 vorgesehen, mittels welchem ein weiterer Zusatzstoff 22' an vorgegebenen Stellen auf eine vom Beschichter 12 gebildete Schicht aufgetragen werden kann, bevor diese mittels des Laserstrahls 15 erhitzt wird. Der Arbeitskopf 17 ist z.B. als Sprüh- oder Druckkopf ausgebildet, mittels welchem der weitere Zusatzstoff 22' z.B. in fester oder flüssiger Form an vorbestimmten Stellen aufgetragen werden kann. Der weitere Zusatzstoff 22' im Arbeitskopf 17 kann z.B. dem Zusatzstoff 22 entsprechen oder ein anderes geeignetes Material sein, welches nach der Erhitzung elektrisch Isolierstellen im Formteil 20 bildet.

Nebst den soweit beschriebenen Verfahren sind auch andere Verfahren geeignet, um weichmagnetische Formteile herzustellen. Beispielsweise ist aus der DE 10 2013 021 944 A1 eine additive Fertigung bekannt, bei welcher mittels elektrofotographischen Bildtrommeln Material an vorgegebenen Stellen auftragen wird. Nebst dem Fertigungsmaterial, welches hier aus magnetisch leitenden Partikeln 21 und Zusatzstoff 22 besteht, kann bei diesem Verfahren auch ein Stützmaterial aufgetragen werden, welches nach der Fertigung des Formteils entfernt und z.B. zur Fertigung von Hinterschnitten dient. Vorzugsweise sind hier mindestens drei Walzen vorgesehen, mittels welchen magnetisch leitende Partikel 21, Zusatzstoff 22 bzw. Stützmaterial auftragbar sind. Ein Fertigungskopf zum Auftragen der magnetisch leitenden Partikel 21 weist eine Fixiereinheit mit einem Laser auf, mittels welchem zeitlich konzentriert Energie auf die magnetisch leitenden Partikel 21 übertragbar ist, um ein Anschmelzen zu erzeugen. Durch Hintereinanderanordnen mehrerer Fertigungsköpfe zum Auftragen von Fertigungs- und Stützmaterial ist eine Produktionsstrasse bereitstellbar, welche eine effiziente Fertigung von Formteilen ermöglicht.

Mittels der hier beschriebenen Herstellungsverfahren sind weichmagnetische Formteile fertigbar, die typischerweise folgende Eigenschaften haben:
- Das Formteil ist nicht-permanentmagentisch.
- Die Dichte des Formteils ist besser angenähert an die Dichte der magnetisch leitenden Partikel. Dies ist u.a. dadurch erreichbar, indem beim Ausgangsmaterial magnetisch leitende Partikel verwendet werden, welche keine vollständige Ummantelung einer elektrischen Isolierschicht aufweisen. Fig. 6 zeigt beispielhaft ein Eisenpartikel 23a, welches vollständig mit einer Isolierschicht 23b versehen ist. Wird ein Formteil aus derartigen Partikeln mit den bekannten Sinterverfahren hergestellt, ist es im Innern relativ porös und weist einen relativ hohen Anteil an Isoliermaterial und auch Bindemittel auf. Entsprechend ist seine Dichte reduziert. Der Erfinder hat erkannt, dass eine vollständige isolierende Umhüllung der magnetisch leitenden Partikel nicht erforderlich ist, um Wirbelstromverluste möglichst zu vermeiden, welche beim Ummagnetisieren des weichmagnetischen Formteils entstehen. Es ist ausreichend, wenn ein magnetisch leitendes Partikel 21 partiell durch eine Isolatorbarriere versehen ist, welche den Wirbelstromfluss unterbricht, wie dies schematisch in Fig. 7 gezeigt ist. Dort ist ein Teil des Formteils 20 dargestellt, beim welchen Wirbelströme I in der Ebene quer zum Magnetfluss B versuchen zu fliessen. Diese werden durch die elektrischen Isolierstellen 22b unterbrochen, die aufgrund des Zusatzstoffes 22 gebildet wurden.
- Das Formteil weist eine schlanke Hysteresekurve auf und entsprechend sind die Hystereseverluste reduziert. Insbesondere ist die magnetische Koerzitivfeldstärke H_{c} klein und die Remanenzflussdichte Bᵣ gross, vgl. Fig. 8. Bei den Statorteilen können aufgrund der erhöhten Flussdichte B längere Pole als üblich realisiert werden und es steht mehr Bauraum für die Wicklung zur Verfügung.
- Die relative Dichte (Dichte des Formteils verglichen mit der Dichte des Materials der magnetisch leitenden Partikel) beträgt mindestens 90 %.
- Es sind Formteile herstellbar, welche die gewünschten physikalischen Parameter aufweisen. Typischerweise weisen die Dichte ρ, die magnetische Koerzitivfeldstärke H_{c} und die Remanenzflussdichte Bᵣ eine maximale Abweichung vom jeweiligen Sollwert von höchstens ±3 %, bevorzugt höchstens ±2 % auf.

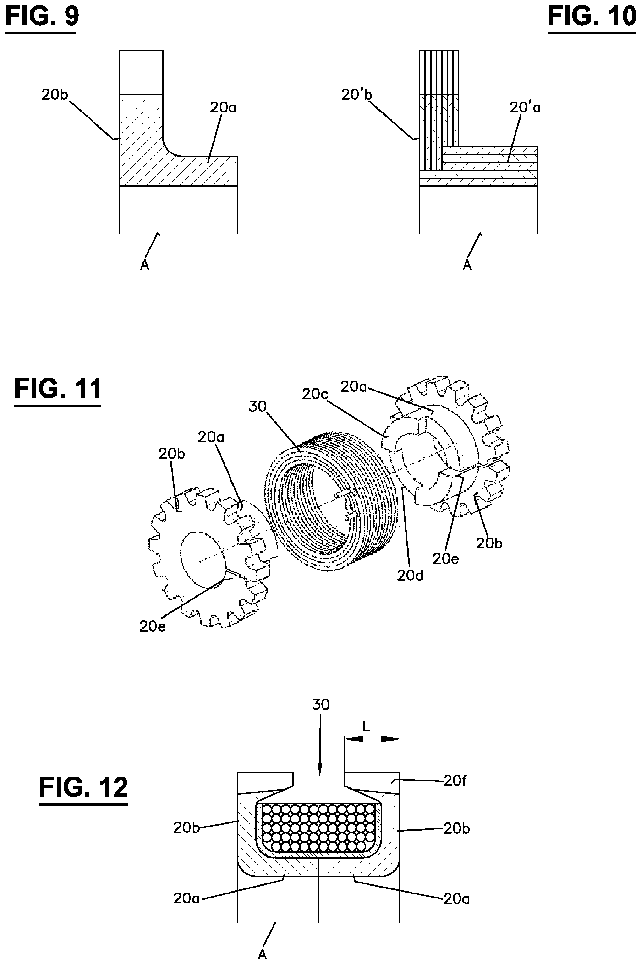

Die hier beschriebenen Herstellungsverfahren haben insbesondere gegenüber dem bekannten Verfahren durch Sintern im Ofen u.a. den Vorteil, dass sich auch Formteile mit komplexen Geometrien herstellen lassen. Beispielsweise sind Statorteile fertigbar, die für einen Magnetfluss ausgelegt sind, der im Betrieb nicht nur in einer Ebene, sondern in allen drei Richtungen erfolgen soll. Fig. 9 und 10 zeigen jeweils eine Hälfte eines Statorteils aus einem Flussrohr 20a bzw. 20'a und einer gezahnten Scheibe 20b bzw. 20'b in einem Längsschnitt, wobei A die Längsachse bezeichnet. Das Statorteil 20a, 20b gemäss Fig. 9 ist mit einem der hier beschriebenen Herstellungsverfahren integral fertigbar und erlaubt durch entsprechende Ausgestaltung der Geometrie die gewünschte Flussleitung zu erzielen. So ist hier der magnetische Fluss derart umleitbar, dass er zuerst quer zur Achse A und dann in dieser Richtung A ausgerichtet ist. Das in Fig. 10 dargestellte Statorteil 20'a, 20'b ist mittels dem vorbekannten Herstellungsverfahren gefertigt, indem das Flussrohr 20'a einen geschichteten Aufbau aufweist und das Scheibenteil 20'b aus einem Blechpaket besteht. Der magnetische Fluss erfolgt im Flussrohr 20'a bzw. im Scheibenteil 20'b jeweils im Wesentlichen in einer Richtung.

Fig. 11 zeigt in einer perspektivischen Explosionsansicht eine Anordnung mit zwei Zahnscheiben 20b mit jeweils einem integral angebrachten Teil des Flussrohrs 20a. Dieses ist derart geteilt, dass es nach Anbringen der Spule 30 in einer definierten Lage zusammengesteckt werden kann, in der die Zähne der beiden Scheiben 20b wunschgemäss miteinander ausgerichtet sind. Im Beispiel wird dies, wie bei einer Klauenkopplung, durch Klauen 20c erreicht, die in Ausnehmungen 20d am gegenüberliegenden Teil eingreifen. In dieser Figur ist auch beim jeweiligen Statorteil 20a, 20b ein Schlitz 20e sichtbar, der im Betrieb einen Ringschluss vermeidet. Der Schlitz 20e kann entweder bei der integralen Fertigung vorgesehen werden oder er kann nachträglich z.B. durch Fräsen angebracht werden, da dies das Formteil aufgrund seiner Härte zulässt.

Auch die Form der Zähne beim Statorteil ist beliebig wählbar. Fig. 12 zeigt im Längsschnitt eine Hälfte der Spule 30 sowie zweier Zahnscheiben 20b mit jeweils dem integral angebrachten Teil des Flussrohrs 20a, wobei A die Rotor- oder Statorachse ist. Wie ersichtlich ist ein Zahn 20f des Statorteils 20a, 20b so geformt, dass er nach innen ragt (vgl. Länge L in Fig. 12) und somit gegenüber z.B. der Variante gemäss Fig. 10 länger in Richtung der Achse A ausgebildet ist.

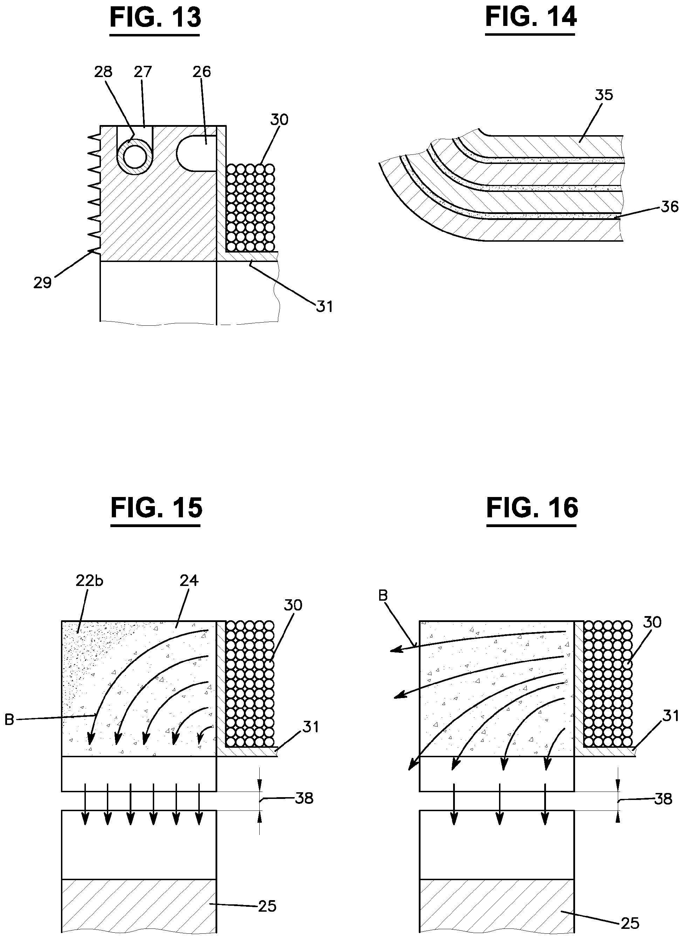

Es sind auch Statorteile fertigbar, welche mit einem Innenhohlraum und/oder integral gefertigten Zusatzelementen versehen sind. Ein Beispiel eines derartigen Statorteils ist in Fig. 13 gezeigt. Der Innenhohlraum 26 bildet einen Innenkanal, durch welchen Luft zur Kühlung der auf dem Wicklungskörper 31 angebrachten Spule 30 transportierbar ist. Der Innenhohlraum 27 bildet ebenfalls einen Innenkanal, ist jedoch mit einem Rohr 28 versehen, um z.B. Wasser zur Kühlung hindurchzuleiten. In dieser Figur sind auch Kühlrippen 29 angedeutet.

Es sind auch Formteile fertigbar, die eine gezielte Verteilung an Isolierstellen aufweisen. Dadurch kann der magnetische Fluss so geführt werden, dass er nicht nur in einer Richtung, wie dies bei den bekannten Blechpaketen der Fall ist, sondern in mehreren Richtungen erfolgt.

Fig. 14 zeigt ein Beispiel, welches Schichten aus einem weichmagnetischen Material 35 und aus Isolationsmaterial 36 aufweist. Die Schichten 35 sind z.B. aus dem Ausgangsmaterial 21, 22 gebildet, welche bei der Anlage gemäss Fig. 1 verwendet wird. Die Isolationsschichten 36 werden z.B. mittels des in Fig. 1 gezeigten Auftragungseinrichtung 17 gefertigt. Es kann somit eine Art "3D-Blechstruktur" gebildet werden, die sich je nach Bedarf nicht nur in der Ebene, sondern in allen drei Richtungen ausdehnen kann, z.B. so wie dies in der Fig. 14 links angedeutet ist.

Fig. 15 zeigt ein Beispiel, bei welchem die Verteilung der elektrischen Isolierstellen 22b inhomogen ist. Hier befinden sich Isolierstellen 22b konzentriert an der der Spule 30 gegenüberliegenden Seite des Statorpols 24. Dadurch wird der magnetische Fluss B besser umgeleitet, so dass er in erhöhtem Masse via den Luftspalt 38 zum Rotorpol 25 gelangt. Ohne diese Aufkonzentrierung an Isolierstellen 22b tritt ein Teil des Magnetfeldes seitlich aus dem Statorpol wie dies in Fig. 16 angedeutet ist. Entsprechend resultieren hier nicht nutzbare Flussverluste.

Weitere Vorteile der hier beschriebenen Herstellungsverfahren sind wie folgt:
- Die zeitlich konzentrierte Energiezufuhr verhindert, dass die magnetisch leitenden Partikel vollständig mit den benachbarten Partikeln verschmelzen. Das Vorsehen insbesondere eines nicht-gasförmigen Zusatzstoffes verhindert, dass die Zwischenräume zwischen den magnetisch leitenden Partikeln durch geschmolzenes Material aufgefüllt werden. Ein Schwundverhalten ist besser kalkulierbar, so dass präzise Formteile mit den gewünschten Massen fertigbar sind. Typischerweise sind Formteile mit einer Formgenauigkeit von besser als ± 0.2 mm fertigbar. Eine Nachbearbeitung ist dabei nicht zwingend erforderlich.
- Es lassen sich weichmagnetische Formteile mit einer hohen Dichte herstellen. Dies ist z.B. vorteilhaft, um Elektromotoren mit grossem Drehmoment bereitstellen zu können. Beispielsweise ist eine Statorteil auf Fe-Basis herstellbar mit mindestens einer Dichte von 7.0 g/cm³, vorzugsweise mindestens 7.3 g/cm³ und besonders bevorzugt mindestens 7.6 g/cm³. Dies ist nahe an der Dichte von Fe, welche 7.9 g/cm³ beträgt.
- Die Wahl an Materialien ist vielfältig. Es lassen sich z.B. durch Wahl von Eisen und einem Zusatzstoff wie z.B. Acrawax sehr kostengünstig weichmagnetische Formteile herstellen oder durch Wahl von Eisen, Cobalt und Acrawax Formteile mit sehr guten magnetischen Eigenschaften, insbesondere solche mit einer hohen Remanenzflussdichte Bᵣ.
- Die Verwendung einer Kombination von magnetisch leitenden Partikeln und Zusatzstoff führt dazu, dass die Metallartikel im gefertigten Formteil punktuell elektrisch isoliert sind. Dies ist ausreichend, um einen hohen spezifischen elektrischen Widerstand zu erzeugen und so die beim Ummagnetisieren entstehenden Wirbelströme wirksam zu reduzieren. Es brauchen daher nicht unbedingt aufwendig hergestellte Ausgangsmaterialien z.B. in Form von Eisenpartikeln, die vollständig von einer Isolationsschicht umgeben sind, vorgesehen werden.
- Es sind formfeste Formteile herstellbar. Im Ausgangsmaterial braucht nicht zwingendermassen ein zusätzliches Bindemittel wie z.B. Kunstharze vorgesehen werden, um die Partikel miteinander zu verbinden. Ein gefertigtes Formteil weist eine Härte auf, die einen genügenden Zusammenhalt der Partikel aufweist, die bei Bedarf einem mechanische Bearbeitung zulässt, insbesondere einen nachträglichen Materialabtrag, z.B. durch Schleifen, Drehen und/oder Fräsen. Dadurch kann ein Formteil mit einer hohen Massgenauigkeit gefertigt werden, um z.B. einen genauen und minimalen Luftspalt zu erhalten.
- Die Geometrie des Formteils ist beliebig wählbar. Es kann z.B. ein oder mehrere Hinterschnitte aufweisen, Mittel zur Kühlung wie Bohrungen, Rippen, Kanäle, etc., Mittel zur genauen Positionierung und/oder Zentrierung wie Nocken, Rippen, Bohrungen, etc.
- Es sind einstückige Formteile herstellbar, die für verschiedene Anwendungszwecke einsetzbar sind, z.B. Teile von Elektromaschinen, wie Elektromotoren bzw. Generatoren, insbesondere Transversalflussmaschinen oder andere Elektromaschinen wie sie z.B. in Elektrofahrzeugen einsetzbar sind.

Aus der vorangehenden Beschreibung sind dem Fachmann zahlreiche Abwandlungen zugänglich, ohne den Schutzbereich der Erfindung zu verlassen, der durch die Ansprüche definiert ist.

## Patentansprüche

1. Verfahren zur Herstellung eines weichmagnetischen Formteils (20), welches im Innern inselartig ausgebildete elektrische Isolierstellen aufweist zur Reduzierung der Wirbelstromverluste, wobei beim Verfahren magnetisch leitende Partikel (21), die frei von einer Ummantelung einer elektrischen Isolierschicht sind, und ein Zusatzstoff (22, 22') zur Bildung elektrischer Isolierstellen bereitgestellt und zur Bildung des Formteils miteinander in Schichten so verschmolzen werden, dass eine Struktur mit Zwischenräumen gebildet wird, und lokal in den Zwischenräumen die elektrischen Isolierstellen angeordnet sind, welche Wirbelströme unterbrechen, die bei einer Verwendung des Formteils in einem Magnetfeld entstehen.

2. Verfahren zur Herstellung eines weichmagnetischen Formteils (20) nach Anspruch 1,
wobei
aus den Partikeln unter Anwesenheit des Zusatzstoffes Schichten gebildet werden, die lokal durch eine Energiezuführung erhitzt werden,
wobei
die Energiezuführung zeitlich konzentriert ist, so dass die magnetisch leitenden Partikel zumindest anschmelzen und eine Struktur mit Zwischenräumen bilden, in welchen aufgrund des Zusatzstoffes inselartig ausgebildete elektrische Isolierstellen gebildet werden.

3. Verfahren nach Anspruch 2, welches mindestens eines der folgenden Merkmale a-e aufweist:
a) der Zusatzstoff (22, 22') ist in Form von Partikeln und/oder als Paste bereitgestellt,
b) der bereitgestellte Zusatzstoff ist flüssig,
c) der bereitgestellte Zusatzstoff ist gasförmig,
d) der Zusatzstoff (22, 22') in den Zwischenräumen wirkt als elektrische Isolierstellen,
e) es bilden sich aufgrund des Zusatzstoffes (22, 22') in den Zwischenräumen Oxidschichten als elektrische Isolierstellen.

4. Verfahren nach einem der vorangehenden Ansprüche, bei welchem die magnetisch leitenden Partikel (21) aus einem Material mit einer Dichte rho bestehen, wobei die Dichte des hergestellten Formteils mindestens 90 %, vorzugsweise mindestens 92 % und besonders bevorzugt mindestens 94 %, der Dichte rho entspricht.

5. Verfahren nach einem der 2. Anspruch 2 bis 4, bei welchem die zeitlich konzentrierte Energiezuführung durch lokales Erhitzen einer Schicht mittels Laserstrahls (15)

6. Verfahren nach einem der vorangehenden Ansprüche, bei welchem mittels einer Auftragungseinrichtung (17) zur Bildung weiterer elektrischer Isolierstellen ein weiterer Zusatzstoff (22'), der vorzugsweise dem bereitgestellten Zusatzstoff (22) entspricht, gezielt auf die Schichten aufgetragen wird, um ein Formteil herzustellen, welches eine inhomogene Verteilung an elektrischen Isolierstellen (22b) aufweist.

7. Verfahren nach einem der vorangehenden Ansprüchen, bei welchem zusätzlich Material angebracht wird zur Bildung mindestens eines Elements, das magnetisch nicht leitend ist, insbesondere eines Stegs und/oder einer Anbindungsstelle, vorzugsweise ist das Element ein integral gefertigtes Element des Formteils (20).

8. Verfahren nach einem der vorangehenden Ansprüche, bei welchem das Formteil (20) durch Materialabtrag nachbearbeitet wird, insbesondere durch Schleifen, Drehen und/oder Fräsen.

9. Verfahren nach einem der vorangehenden Ansprüche, wobei der Zusatzstoff (22) in Form von Partikeln bereitgestellt wird und vorzugsweise mindestens eines der folgenden Merkmale A-C aufweist:
A) die magnetisch leitenden Partikel (21) und der Zusatzstoff (22) sind in Form eines Gemisches bereitgestellt,
B) der Zusatzstoff (22) liegt in Form von Partikeln vor, deren Korngrösse kleiner als jener der magnetisch leitenden Partikel (21) ist,
C) die Schmelztemperatur des Zusatzstoffes (22) ist höher als jene der magnetisch leitenden Partikeln (21), so dass der Zusatzstoff in den Zwischenräumen durch die zeitlich konzentrierte Energiezuführung im Wesentlichen nicht geschmolzen wird, oder
die Schmelztemperatur des Zusatzstoffes (22) ist höchstens so hoch wie jene der magnetisch leitenden Partikeln (21), so dass sich durch die zeitlich konzentrierte Energiezuführung die Struktur des Zusatzstoffes verändert wird, indem er elektrisch isolierende Schichten in den Zwischenräumen bildet.

10. Verfahren nach einem der vorangehenden Ansprüche, wobei die zur Herstellung des Formteils (20) verwendeten Materialien frei von Epoxid-, Phenol- und Polyamidharzen als Bindemittel sind.

11. Verfahren nach einem der vorangehenden Ansprüche, bei welchem die magnetisch leitenden Partikel (21) aus einem Material bestehen, das Eisen, Nickel und/oder Cobalt umfasst, und/oder ein Gemisch bilden, welches mindestens eines der nachfolgenden Materialien enthält:
- Eisen
- Silizium
- Cobalt
- Nickel
- Aluminium
- Kupfer
- Zinn
- Antimon
- Bor
- Arsen
- Wismut
- Chromoxid
- Ferrite.

12. Verfahren nach einem der vorangehenden Ansprüche, wobei der Zusatzstoff (22, 22') mindestens einen der folgenden Stoffe umfasst:
- Silikon
- Germanium
- Wachs, insbesondere N,N'-Ethylenbisstearamid
- Thermoplast, insbesondere Polyvinylchlorid, Polyethersulfon, Polycarbonat
- Aluminiumoxid
- Kohlenstoff
- Keramik
- Glas
- Gas oder Gasgemisch zur Bildung einer Oxidschicht

13. Verfahren nach einem der vorangehenden Ansprüche, welches auf einer Anlage durchgeführt wird, welche mindestens eines der folgenden Merkmale M1-M5 aufweist:
M1) mindestens ein Reservoir (10) zur Aufnahme zumindest der magnetisch leitenden Partikel (21),
M2) ein Fertigungsbett (11) mit einer schichtweise verfahrbaren Arbeitsplattform (11a), in welchem das Formteil (20) gefertigt wird,
M3) mindestens einen verfahrbaren Beschichter (12), mittels welchem eine Schicht, welche magnetisch leitende Partikel (21) aus einem bzw. dem mindestens einen Reservoir (10) umfasst, in einem bzw. dem Fertigungsbett (11) bildbar ist,
M4) mindestens einen Laser (13) und mindestens eine Scaneinrichtung (14) zum Erzeugen und Führen des Laserstrahls (15) entlang einer vorbestimmten Bahn,
M5) mindestens eine Auftragungseinrichtung (17), mittels welcher ein Zusatzstoff (22') zur Bildung elektrischer Isolierstellen gezielt auf eine jeweilige Schicht auftragbar ist.

14. Weichmagnetisches Formteil, welches als Stator- oder Rotorteil einer elektrischen Maschine dient, im Innern inselartig ausgebildete elektrische Isolierstellen aufweist zur Reduzierung der Wirbelstromverluste und welches mit dem Verfahren nach einem der vorangehenden Ansprüche hergestellt ist, so dass zumindest angeschmolzene magnetisch leitende Partikel eine Struktur mit Zwischenräumen bilden, in welchen die inselartig ausgebildeten elektrischen Isolierstellen gebildet sind, wobei das Formteil mindestens eines der folgenden Merkmale a-c aufweist:
a) Das Formteil weist magnetisch leitende Bereiche (21) auf, die aus einem Material mit einer Dichte rho bestehen, wobei die Dichte des Formteils mindestens 90 % der Dichte rho entspricht.
b) Das Formteil ist integral gefertigt und weist mindestens einen Innenhohlraum (26, 27) auf.
c) Das Formteil ist integral gefertigt und weist eine inhomogene Verteilung an elektrischen Isolierstellen auf.

15. Formteil nach Anspruch 14, dessen Dichte grösser als 7.0 Gramm pro Kubikzentimeter ist, bevorzugt grösser als 7.1 Gramm pro Kubikzentimeter und besonders bevorzugt grösser als 7.2 Gramm pro Kubikzentimeter.

16. Formteil nach einem der Ansprüche 14 oder 15, bei welchem der Innenhohlraum einen Innenkanal (26) zur Kühlung bildet und/oder bei welchem integral gefertigte Kühlrippen vorgesehen sind und/oder welches als Statorteil mit Zähnen ausgebildet ist, welche zur Bildung von Polen dienen.

## Claims

1. Method for the production of a soft magnetic formed part (20) which has inside island-like formed electrical insulating locations to reduce eddy current losses, in which method magnetically conductive particles (21), which are free from a sheathing of an electrical insulating layer, and an additive (22, 22') for the formation of electrical insulating locations are provided and, for the formation of the formed part, are fused to one another in layers in such a way that a structure with interspaces is formed, and the electrical insulating locations interrupting eddy currents, which arise when the formed part is used in a magnetic field, are arranged locally in the interspaces.

2. Method for the production of a soft magnetic formed part (20) according to claim 1, wherein
layers are formed from the particles in the presence of the additive, which layers are heated locally by an energy supply, wherein
the energy supply is temporally concentrated so that the magnetically conductive particles at least surface-fuse and form a structure with interspaces, in which island-like formed electrical insulating locations are formed due to the additive.

3. Method according to claim 2, which has at least one of the following features a-e:
a) the additive (22, 22') is provided in the form of particles and/or as a paste,
b) the additive provided is liquid,
c) the additive provided is gaseous,
d) the additive (22, 22') in the interspaces acts as electrical insulating locations,
e) due to the additive (22, 22'), oxide layers are formed as electrical insulating locations in the interspaces.

4. Method according to one of the preceding claims, in which the magnetically conductive particles (21) consist of a material with a density rho, the density of the formed part produced corresponding to at least 90%, preferably at least 92% and particularly preferably at least 94% of the density rho.

5. Method according to one of claims 2 to 4, in which the temporally concentrated energy supply is effected by locally heating a layer by means of a laser beam (15).

6. Method according to one of the preceding claims, in which, by means of an application device (17) for the formation of further electrical insulating locations a further additive (22'), which preferably corresponds to the additive (22) provided, is selectively applied to the layers in order to produce a formed part which has an inhomogeneous distribution of electrical insulating locations (22b).

7. Method according to one of the preceding claims, in which additional material is applied for the formation of at least one element which is magnetically non-conductive, in particular a crosspiece and/or a connecting location, preferably the element is an integrally manufactured element of the formed part (20).

8. Method according to one of the preceding claims, in which the formed part (20) is reworked by material removal, in particular by grinding, turning and/or milling.

9. Method according to one of the preceding claims, wherein the additive (22) is provided in the form of particles and preferably has at least one of the following characteristics A-C:
A) the magnetically conductive particles (21) and the additive (22) are provided in the form of a mixture,
B) the additive (22) is present in the form of particles whose grain size is smaller than that of the magnetically conductive particles (21),
C) the melting temperature of the additive (22) is higher than the one of the magnetically conductive particles (21), so that the additive is substantially not melted in the interspaces by the temporally concentrated energy supply, or
the melting temperature of the additive (22) is at most as high as that of the magnetically conductive particles (21), so that the temporally concentrated energy supply changes the structure of the additive by forming electrically insulating layers in the interspaces.

10. Method according to any of the preceding claims, wherein the materials used for the production of the formed part (20) are free from epoxy, phenolic and polyamide resins as binders.

11. Method according to one of the preceding claims, in which the magnetically conductive particles (21) consist of a material which comprises iron, nickel and/or cobalt and/or form a mixture which contains at least one of the following materials:
- Iron
- Silicon
- Cobalt
- Nickel
- Aluminum
- Copper
- Tin
- Antimony
- Boron
- Arsenic
- Bismuth
- Chromium oxide
- Ferrites.

12. Method according to one of the preceding claims, wherein the additive (22, 22') comprises at least one of the following substances:
- Silicone
- Germanium
- Wax, especially N, N'-ethylene bis stearamide
- Thermoplastic, especially polyvinyl chloride, polyether sulfone, polycarbonate
- Aluminum oxide
- Carbon
- Ceramics
- Glass
- Gas or gas mixture to form an oxide layer

13. Method according to one of the preceding claims, which is carried out on a system which has at least one of the following features M1-M5:
M1) at least one reservoir (10) for receiving at least the magnetically conductive particles (21),
M2) a manufacturing bed (11) with a working platform (11a) which can be moved layer by layer, in which bed the formed part (20) is manufactured,
M3) at least one movable coater (12) by means of which a layer which comprises magnetically conductive particles (21) from a or the at least one reservoir (10) can be formed in a or the manufacturing bed (11),
M4) at least one laser (13) and at least one scanning device (14) for generating and guiding the laser beam (15) along a predetermined path,
M5) at least one application device (17), by means of which an additive (22') for forming electrical insulating locations can be applied specifically to a respective layer.

14. Soft magnetic formed part which serves as a stator or rotor part of an electrical machine, which has inside island-like formed electrical insulating locations to reduce eddy current losses and which is produced by the method according to one of the preceding claims in such a way that at least surface-fused magnetically conductive particles form a structure with interspaces, in which the island-like formed electrical insulating locations are formed, the formed part having at least one of the following features a-c:
a) The formed part has magnetically conductive regions (21) which are made of a material with a density rho, the density of the formed part being at least 90 % of the density rho.
b) The formed part is integrally manufactured and has at least one internal cavity (26, 27).
c) The formed part is integrally manufactured and has an inhomogeneous distribution of electrical insulating locations.

15. Formed part according to claim 14, the density of which is greater than 7.0 grams per cubic centimeter, preferably greater than 7.1 grams per cubic centimeter and particularly preferably greater than 7.2 grams per cubic centimeter.

16. Formed part according to one of claims 14 or 15, in which the inner cavity forms an inner channel (26) for cooling and/or in which integrally manufactured cooling ribs are provided and/or which is designed as a stator part with teeth which serve for the formation of poles.

## Revendications

1. Procédé de fabrication d'une pièce de forme (20) magnétiquement douce, qui présente à l'intérieur des endroits d'isolation électrique en forme d'îlots pour une réduction des pertes par courants de Foucault, le procédé comprenant la fourniture de particules électriquement conductrices (21) qui sont exemptes d'un enrobage électriquement isolant et d'un additif (22, 22') pour la formation d'endroits d'isolation électrique, et leur fusion en couches pour la formation de la pièce de forme de telle manière qu'une structure avec des interstices est formée, et localement dans les interstices sont disposés les endroits d'isolation électrique qui interrompent les courants de Foucault qui se produisent lors de l'utilisation de la pièce de forme dans un champ magnétique.

2. Procédé de fabrication d'une pièce de forme magnétiquement douce (20) selon la revendication 1, où
à partir des particules sont formées en présence de l'additif des couches qui sont chauffées localement par un apport d'énergie, où
l'apport d'énergie est temporellement concentré, de sorte que les particules magnétiquement conductrices fondent au moins partiellement et forment une structure avec des interstices dans lesquels des endroits d'isolation électrique en forme d'îlots sont formés en raison de l'additif.

3. Procédé selon la revendication 2, lequel présente l'une au moins des caractéristiques a-e suivantes:
a) l'additif (22, 22') est fourni sous forme de particules et/ou de pâte,
b) l'additif fourni est liquide,
c) l'additif fourni est gazeux,
d) l'additif (22, 22') dans les interstices agit en tant qu' endroits d'isolation électrique,
e) dans les interstices se forment en raison de l'additif (22, 22') des couches d'oxyde en tant qu' endroits d'isolation électrique.

4. Procédé selon l'une des revendications précédentes, dans lequel les particules magnétiquement conductrices (21) sont constituées d'un matériau ayant une densité rho, la densité de la pièce de forme fabriquée étant au moins égale à 90 %, de préférence au moins égale à 92 % et particulièrement préférentiellement au moins égale à 94 % de la densité rho.

5. Procédé selon l'une des revendications 2 à 4, dans lequel l'apport d'énergie temporellement concentré est réalisé par chauffage local d'une couche au moyen d'un faisceau laser (15).

6. Procédé selon l'une des revendications précédentes, dans lequel un additif supplémentaire (22'), qui correspond de préférence à l'additif (22) fourni, est appliqué de manière ciblée sur les couches au moyen d'un dispositif d'application (17) pour former d'autres endroits d'isolation électrique, afin de fabriquer une pièce de forme qui présente une répartition non homogène d'endroits d'isolation électrique (22b).

7. Procédé selon l'une des revendications précédentes, dans lequel de la matière est appliquée en plus pour former au moins un élément qui est magnétiquement non conducteur, en particulier une barrette et/ou un endroit de liaison, de préférence ledit élément est un élément fabriqué intégralement avec la pièce de forme (20).

8. Procédé selon l'une des revendications précédentes, dans lequel la pièce de forme (20) est retravaillée par enlèvement de matière, notamment par meulage, tournage et/ou fraisage.

9. Procédé selon l'une des revendications précédentes, dans lequel l'additif (22) est fourni sous la forme de particules et présente de préférence l'une au moins des caractéristiques A-C suivantes:
A) les particules magnétiquement conductrices (21) et l'additif (22) sont fournis sous la forme d'un mélange,
B) l'additif (22) se présente sous la forme de particules dont la taille de grain est inférieure à celle des particules magnétiquement conductrices (21),
C) la température de fusion de l'additif (22) est supérieure à celle des particules magnétiques conductrices (21), de sorte que l'additif n'est substantiellement pas fondu dans les interstices par l'apport d'énergie temporellement concentré, ou bien la température de fusion de l'additif (22) est au plus égale à celle des particules magnétiquement conductrices (21), de sorte que la structure de l'additif est modifiée par l'apport d'énergie temporellement concentré en formant des couches électriquement isolantes dans les interstices.

10. Procédé selon l'une des revendications précédentes, dans lequel les matériaux utilisés pour la fabrication de la pièce de forme (20) sont exempts de résines époxyde, phénoliques et polyamides en tant que liants.

11. Procédé selon l'une des revendications précédentes, dans lequel les particules magnétiquement conductrices (21) sont constituées d'un matériau comprenant du fer, du nickel et/ou du cobalt et/ou forment un mélange contenant au moins l'un des matériaux suivants :
- fer
- silicium
- cobalt
- nickel
- aluminium
- cuivre
- étain
- antimoine
- bore
- arsenic
- bismuth
- oxyde de chrome
- ferrite.

12. Procédé selon l'une des revendications précédentes, dans lequel l'additif (22, 22') comprend l'une au moins des substances suivantes:
- silicone
- germanium
- cire, en particulier N,N'-éthylène bisstéaramide
- matière thermoplastique, en particulier polychlorure de vinyle, polyéthersulfone, polycarbonate
- oxyde d'aluminium
- carbone
- céramique
- verre
- gaz ou mélange de gaz pour former une couche d'oxyde

13. Procédé selon l'une des revendications précédentes, mis en oeuvre sur une installation présentant l'une au moins des caractéristiques M1-M5 suivantes:
M1) au moins un réservoir (10) pour recevoir au moins les particules magnétiquement conductrices (21),
M2) un lit de fabrication (11) avec une plate-forme de travail (11a) déplaçable par couches, dans lequel la pièce de forme (20) est fabriquée,
M3) au moins un enducteur déplaçable (12), au moyen duquel une couche qui comprend des particules magnétiquement conductrices (21) provenant d'un ou dudit au moins un réservoir (10) peut être formée dans un ou ledit lit de fabrication (11),
M4) au moins un laser (13) et au moins un dispositif de balayage (14) pour générer et guider le faisceau laser (15) le long d'une trajectoire prédéterminée,
M5) au moins un dispositif d'application (17) au moyen duquel un additif (22') destiné à former des endroits d'isolation électrique peut être appliqué de manière ciblée sur une couche respective.

14. Pièce de forme magnétiquement douce, qui sert de partie de stator ou de rotor d'une machine électrique, qui présente à l'intérieur des endroits d'isolation électrique en forme d'îlots pour une réduction des pertes par courants de Foucault et qui est fabriquée par l'intermédiaire du procédé selon l'une des revendications précédentes, de sorte que des particules magnétiquement conductrices au moins partiellement fondues forment une structure avec des interstices dans lesquels sont formés les endroits d'isolation électrique en forme d'îlots, la pièce de forme présentant l'une au moins des caractéristiques a-c suivantes:
a) La pièce de forme présente des zones magnétiquement conductrices (21) qui sont constituées d'un matériau ayant une densité rho, la densité de la pièce de forme étant au moins égale à 90 % de la densité rho.
b) La pièce de forme est fabriquée intégralement et présente au moins une cavité intérieure (26, 27).
c) La pièce de forme est fabriquée intégralement et présente une répartition non homogène des endroits d'isolation électrique.

15. Pièce de forme selon la revendication 14, dont la densité est supérieure à 7,0 grammes par centimètre cube, de préférence supérieure à 7,1 grammes par centimètre cube et de manière particulièrement préférée supérieure à 7,2 grammes par centimètre cube.

16. Pièce de forme selon l'une des revendications 14 ou 15, dans laquelle la cavité interne forme un canal interne (26) de refroidissement et/ou dans laquelle des ailettes de refroidissement intégralement réalisées sont prévues et/ou qui est réalisée en tant que pièce statorique avec des dents qui servent à former des pôles.
